# FASCICULE DE BREVET EUROPEEN

(11) **EP 2 440 405 B1**
(45) Date de publication et mention de la délivrance du brevet: **14.01.2015**
(21) Numéro de dépôt: 10727764.2
(22) Date de dépôt: 08.06.2010
(51) Int. Cl.: B32B 15/18, B32B 15/08, B32B 27/18, B32B 27/32

(54) **PIÈCE COMPOSITE À BASE DE MÉTAL ET DE POLYMÈRE, APPLICATION NOTAMMENT AU DOMAINE DE L'AUTOMOBILE**
VERBUNDMETALL- UND POLYMERTEIL ZUR VERWENDUNG INSBESONDERE IM KRAFTFAHRZEUGBEREICH
COMPOSITE METAL AND POLYMER PART, USE IN PARTICULAR IN THE AUTOMOTIVE FIELD

(30) Priorité: 08.06.2009 WO PCT/FR2009/000674
(43) Date de publication de la demande: 18.04.2012
(73) Titulaire: Arcelormittal Investigación y Desarrollo SL, 48910 Sestao, Bizkaia (ES)
(72) Inventeur: DOUX, Marjolaine, F-75010 Paris (FR); VERCHERE, Didier, F-60260 Lamorlaye (FR)
(74) Mandataire: Domenego, Bertrand
(86) Numéro de dépôt international: PCT/FR2010/000418
(87) Numéro de publication internationale: WO 2010/142868

(56) Documents cités:
- EP-A1- 0 598 428
- EP-A2- 0 609 569
- WO-A1-97/28213
- WO-A1-2006/063957
- FR-A1- 2 866 592
- US-A- 4 229 504
- ROTZINGER ET AL: "Talc-filled PP: A new concept to maintain long term heat stability", POLYMER DEGRADATION AND STABILITY, BARKING, GB, vol. 91, no. 12, 1 décembre 2006 (2006-12-01), pages 2884-2887, XP025095941, ISSN: 0141-3910, DOI: DOI:10.1016/J.POLYMDEGRADSTAB.2006.09.008 [extrait le 2006-12-01]

## Description

L'invention concerne une pièce composite à base de métal et de polymère, son procédé de fabrication et son utilisation notamment dans le domaine de l'automobile et des transports.

Les pièces composites permettent de concourir à l'allègement des structures automobiles.

Il est connu notamment du brevet FR 2 866 592 de fabriquer à cet effet une pièce comportant une tôle d'acier recouverte d'un ou de plusieurs films adhérents de polymère d'épaisseur d'au moins 0,1 millimètre. Cette pièce, à la base sous forme de bobine, doit pouvoir supporter toutes les étapes de mise en oeuvre (manutention, découpe, pliage, emboutissage, perçage, ...).

Par ailleurs, ces pièces doivent impérativement supporter le passage en cataphorèse et l'application de toutes les couches de peintures sur la face côté acier. Ainsi l'intégralité du procédé de mise en peinture automobile est transposable sur ce composite, comme sur une surface métallique classique, avec les mêmes peintures et les mêmes épaisseurs, donc en final avec le même aspect peint. La cataphorèse est une technique de peinture industrielle, employée notamment dans l'industrie automobile, qui consiste essentiellement à immerger la pièce dans un bain de peinture en mettant la pièce en cathode et en faisant migrer les particules de peinture en suspension dans le bain au moyen de courant électrique. Ensuite, la peinture est cuite au four.

Par conséquent, la pièce doit donc pouvoir supporter un passage dans une atmosphère à une température comprise entre 150 et 210 °C pendant environ 30 minutes et ne pas présenter de zones de retrait, de coulure, de fluage ou de contraintes internes pouvant entraîner craquelage, fissuration, déformation ou une délamination entre le métal et le polymère. Sa stabilité thermique doit être suffisamment élevée pour tenir durant les étapes de préparation de surface et de traitement de surface du métal et toutes les étapes de cuisson des différentes couches de peintures. Le cycle de cuisson de la couche de cataphorèse est le plus sévère pour le polymère comparativement aux autres cycles de cuisson des couches de peinture : l'apprêt, la base et le clear vernis.

De plus, la fabrication de cette pièce doit être compatible avec les sorties de lignes et notamment la sortie de ligne de galvanisation ou de ligne de laquage, dénommée aussi vernissage en bande ou laquage en bande. Cela suppose que le film de polymère soit de forte épaisseur (typiquement 300µm) et se présente sous la forme d'une bobine de grande largeur (typiquement 1,5m) afin d'être colaminé sur la tôle d'acier à des vitesses pouvant aller jusqu'à 180 m/min.

Enfin, en service sur un véhicule automobile, la pièce doit résister à des variations thermiques allant de -40°C à 80°C.

Il est connu du brevet US4,229,504 de recourir à un polymère comprenant 10 à 70% de charges inorganiques et 30 à 90% d'un mélange lui-même constitué de 50 à 75% d'une polyoléfine et de 25 à 50% d'un élastomère. Ce polymère, associé à un parement métallique, ne flue pas lors de l'étape de cataphorèse. Cependant les fortes proportions d'élastomère et de charges inorganiques, nécessaires à la résistance au fluage, détériorent les propriétés mécaniques du polymère, telles que sa rigidité et son allongement, et empêchent également la fabrication de films homogènes et de grande largeur par extrusion.

L'invention a pour but de remédier aux inconvénients de l'art antérieur en fournissant un mélange polymérique extrudable sous une forme compatible avec le procédé de fabrication de la pièce composite et une pièce composite résistant à l'étape de cataphorèse.

A cet effet, la pièce composite de l'invention comprend au moins une tôle d'acier revêtue d'au moins un film polymérique préalablement formé par extrusion d'un mélange polymérique comportant au moins les éléments suivants :
- un polymère formé d'une dispersion de nodules d'élastomère dans une matrice polypropylène, la proportion d'élastomère dans la matrice étant inférieure à 20% en poids de l'ensemble formé par la matrice et l'élastomère,
- un premier antioxydant de la famille des antioxydants phénoliques pour une teneur en poids supérieure ou égale à 0,2%,
- un deuxième antioxydant de la famille des antioxydants décomposeurs d'hydropéroxydes pour une teneur en poids supérieure ou égale à 0,1%,
- des charges de renforcement pour une teneur en poids inférieure à 10%.

La pièce composite de l'invention peut également comporter les caractéristiques optionnelles suivantes prises isolément ou en combinaison :
- la proportion d'élastomère dans la matrice est comprise entre 8 et 20% en poids de l'ensemble formé par la matrice et l'élastomère,
- le premier antioxydant est présent dans le mélange polymérique à hauteur de 0,2% et que le deuxième antioxydant est présent dans le mélange polymérique à hauteur de 0,1%,
- les charges sont du microtalc,
- la pièce composite comporte en outre une couche polymérique de polyoléfine fonctionnalisée en sous-face du film polymérique.
- le film polymérique est recouvert d'une couche polymérique de polyoléfine fonctionnalisée.
- La pièce composite comporte en outre, entre la tôle d'acier et le film polymérique, un primaire appliqué sur la tôle d'acier et/ou une colle appliquée sur le primaire.

L'invention concerne également un procédé de fabrication de la pièce composite essentiellement caractérisé en ce qu'il comprend au moins une étape d'extrusion du mélange polymérique sous la forme d'un film et une étape de colamination du film polymérique obtenu sur la tôle d'acier, éventuellement recouverte d'un primaire et d'une colle. Optionnellement le mélange polymérique est co-extrudé avec la couche polymérique de polyoléfine fonctionnalisée.

Enfin, l'invention porte sur l'utilisation de la pièce composite de l'invention précédemment décrite dans le domaine de l'automobile.

L'utilisation de la pièce composite de l'invention peut également comporter les caractéristiques optionnelles suivantes prises isolément ou en combinaison :
- la pièce composite est mise en forme par emboutissage, estampage, hydroformage ou profilage.
- La pièce composite est utilisée pour la fabrication de pièces par surmoulage.

Dans l'ensemble du texte, on entendra par tôle d'acier un substrat d'acier éventuellement recouvert d'un revêtement métallique par galvanisation ou électrodéposition et éventuellement recouvert d'un traitement de surface tel qu'un traitement de conversion.

L'invention sera mieux comprise à la lecture de la description qui suit :
De façon surprenante, il a été constaté par les inventeurs que la combinaison d'un polymère formé d'une dispersion de nodules d'élastomère dans une matrice polypropylène et de faibles quantités d'antioxydants et de charges minérales telles que du micro-talc permettait d'obtenir, d'une part, un mélange polymérique extrudable sous la forme d'un film de forte épaisseur et de grande largeur et, d'autre part, une pièce composite résistant à l'étape de cataphorèse.

Le mélange polymérique est basé sur une matrice polypropylène qui offre le meilleur compromis propriétés d'usage (mécaniques, d'isolation et d'insonorisation), coût, impact environnemental (réduction de poids, diminution des composés organiques volatils relargués). Cette matrice peut être constituée d'un seul polypropylène ou d'un mélange de plusieurs polypropylènes. De préférence, on aura recours à un polypropylène isotactique de masse molaire en poids d'environ 400 000 g/mole et de MFI (indice de fluidité) d'environ 2, qui participe à la résistance du film polymérique à -40°C.

A cette matrice est ajouté un élastomère dans des proportions allant de 8 à 20% en poids d'élastomère dans la matrice polypropylène. Cet élastomère pourra être par exemple un EPR (Ethylene/Propylene Rubbers) ou un EPDM (Ethylene/Propylenediene terpolymer). Il est introduit dans la matrice polypropylène sous la forme d'une phase dispersée, ce qui signifie que des nodules d'élastomères sont uniformément répartis dans la matrice polypropylène.

Ces nodules d'élastomère jouent le rôle de concentrateur de contrainte ce qui arrête la propagation des fissures. L'ajout d'élastomère permet dans ce cas de passer d'un mode de rupture fragile à un mode de rupture ductile.

En-dessous de 8% en poids d'élastomère dans la matrice, la tenue à froid du film polymérique est jugée insuffisante. Au delà de 20% d'élastomère, la dispersion des nodules d'élastomère dans la matrice polypropylène se dégrade et l'élastomère commence à se dissoudre dans la matrice et plastifie celle-ci. Cette plastification est particulièrement pénalisante car elle conduit à une perte de la rigidité du film polymérique.

Préférentiellement on aura recours à de l'EPR, dans des proportions comprises entre 14 et 17%, ce qui présente le meilleur compromis entre les performances de tenue à froid du film polymérique et la qualité de la phase dispersée.

Le mélange polymérique selon l'invention subit trois phases successives de fortes contraintes thermiques que sont l'extrusion, l'étape de cataphorèse et la phase de service pendant toute la durée de vie du véhicule. Afin de minimiser la dégradation du mélange polymérique au cours de ces trois phases, ce mélange incorpore des additifs complémentaires.

En premier lieu, afin d'éviter la dégradation lors de l'extrusion et l'étape de cataphorèse, le mélange polymérique contient un mélange de deux antioxydants. Le premier antioxydant appartient à la famille des antioxydants phénoliques. Ce premier antioxydant agira principalement lors de l'extrusion du mélange polymérique en évitant l'oxydation du deuxième antioxydant.

Le deuxième antioxydant appartient à la famille des antioxydants décomposeurs d'hydropéroxydes. Il va, entre autre, avoir un rôle sur la tenue thermique du film polymérique pendant la cataphorèse.

La singularité de ce mélange tient à une synergie entre ces deux antioxydants qui permet au film polymérique fait à base d'un polymère qui seul ne supporte pas la cataphorèse, de passer cette opération sans dégradation ni zones de retrait ou de contraintes dans le film organique pouvant entraîner la délamination entre le métal et le polymère.

Cet effet de synergie n'est valable que pour des quantités respectives spécifiques de ces deux antioxydants dans le mélange polymérique à savoir un minimum de 0,2% en poids du mélange polymérique pour le premier antioxydant et un minimum de 0,1% en poids du mélange polymérique pour le deuxième antioxydant.

Des tests effectués avec des pourcentages identiques de 0,1% en poids du mélange polymérique pour les deux antioxydants ont montré que la pièce composite résultante ne passait pas la cataphorèse.

On choisira de préférence comme premier antioxydant du Tétrakis (3-(3,5-dit-butyl-4-hydroxyphényl)propionate de pentaérythritol) vendu sous les noms commerciaux de IRGANOX^{®} et ETHANOX^{®}.

Comme deuxième antioxydant, on choisira de préférence un phosphite aromatique et plus spécifiquement du phosphite de tris (2,4-di-t-butylphényle) vendu sous le nom commercial de ETHAPHOS^{®}.

En second lieu, pendant toute la durée de vie d'une voiture, le polymère doit se dégrader le moins possible. Ainsi, il est préférable que ce polymère, en plus de sa tenue en température tienne parfaitement sous l'influence de l'environnement : vieillissement thermochimique (températures élevées), vieillissement thermo-oxydatif (température et oxygène), vieillissement chimique en milieu liquide (eau, réactifs chimiques (sel, projection de boues sales et corrosives, essence, huile...)). Par ailleurs, on cherche également à ce que le composite supporte, en service, les changements climatiques (- 40°C à + 80°C) comme expliqué précédemment et les agressions mécaniques (gravillons, chocs caddies).

A cet effet, on ajoute également dans le mélange polymérique des charges de renforcement pour un pourcentage massique inférieur à 10%. Au delà de 10%, les charges altèrent l'allongement à la rupture du film polymérique et leur dureté tend à marquer la surface des pièces composites mises en forme, rendant cette surface d'une qualité impropre à l'utilisation de la pièce composite dans le secteur automobile.

Ces charges permettent notamment de pouvoir diminuer la quantité d'antioxydants présents dans le mélange polymérique tout en bénéficiant de l'effet synergétique décrit précédemment et d'éviter donc de modifier de façon trop conséquente les propriétés du polymère. Les charges accroissent la résistance thermique et mécanique, elles confèrent au film polymérique une résistance aux chocs satisfaisante à -40°C ainsi qu'une bonne rigidité à +80°C.

De plus, les charges contribuent sensiblement à la minimisation du retrait du film polymérique lors de la phase de cataphorèse. Ces charges agissent comme des points de réticulation améliorant la stabilité des chaines amorphes et comme des concentrateurs de contrainte. Elles améliorent ainsi la stabilité dimensionnelle du film polymérique.

On peut utiliser tout type de charges (minérales, organiques, métalliques) connues par exemple la dolomie, les carbonates de calcium ou de magnésium, la chaux, le quartz, le nitrure de bore, le sulfure de zinc, le kaolin, la wollastonite, le dioxyde de titane, la silice, la Montmorillonite (nano-argile), les billes de verre, les fibres de verre ou de carbone, le talc, le mica ou encore le noir de carbone, le graphite lamellaire, les nano-tubes de carbone, les fibres d'inox, les phosphures métalliques, les fibres de polyamide et charges cellulosiques.

De façon préférentielle, on utilise du micro-talc, qui comprend des plaquettes de taille inférieure au micron. Il est notamment commercialisé sous forme de granulé en mélange maître (mélange maître à base de polypropylène et de microtalc) par Multibase, Groupe Dow Corning. Le micro-talc sous forme de granulé en mélange maître est avantageux en ce qu'il permet d'obtenir une très bonne dispersion dans le mélange polymérique et donc au final un très bon aspect de surface. Par ailleurs, avec seulement entre 2 à 9% en poids de micro-talc, le film polymérique conserve son allongement, son aspect et sa flexibilité, tout en augmentant fortement les propriétés mécaniques du film polymère. Ce pourcentage de micro-talc facilite également l'extrusion du film, en augmentant légèrement la viscosité du mélange polymérique. En revanche au delà de 10%, les charges, qui sont d'une grande dureté, usent prématurément les outils d'extrusion.

De plus, durant l'étape d'extrusion du film, à la température d'extrusion du polypropylène, il n'apparaît pas d'incompatibilité ou d'interaction chimique entre les anti-oxydants et le micro-talc pouvant entraîner une dégradation du film ou un changement de sa structure semi-cristalline et une perte de ses propriétés ou de son aspect ou de sa durabilité.

De plus, le recours au micro-talc diminue significativement le retrait du film polymérique lors de l'étape de cataphorèse comparativement à d'autres charges. En effet, ce micro-talc est sous forme de plaquettes qui s'orientent dans le sens de l'extrusion. Ces plaquettes contrent ainsi avec plus d'efficacité le retrait et rendent celui-ci homogène dans les deux directions transversales et longitudinales de l'extrusion.

On peut en outre prévoir l'introduction de charges conductrices (sphérique ou lamellaire ou aiguille ou fibre) dans le mélange polymérique afin de rendre le film polymérique conducteur et ainsi apte à recevoir une peinture (liquide ou en poudre) déposée par voie électrolytique ou électrostatique.

Indépendamment de son utilisation dans le secteur de l'automobile, le film polymérique doit adhérer de façon optimisée sur la tôle d'acier.

Pour cela, on prévoit d'appliquer sur la tôle, par exemple en sortie de bain de galvanisation, un traitement de surface et un primaire organique déposé par enduction (pour ligne de laquage). La technologie employée sur les lignes de laquage des aciers plats consiste à appliquer au rouleau le primaire anticorrosion. Ce primaire organique, classiquement entre 6 et 10 microns, assure la protection du métal et la parfaite adhérence entre le métal et les couches organiques. De plus ce primaire doit être extrêmement flexible afin de permettre la mise en forme du composite. Les primaires sont classiquement des mélanges à base de résine polyester qui réticulent en présence de durcisseur de type mélamine et/ou isocyanate. Ces primaires possèdent également des pigments inorganiques et des inhibiteurs de corrosion. Dans le cadre de ce composite, on privilégie l'utilisation d'un primaire extrêmement flexible, à la base avec des masses molaires très élevées, avec une adhérence métal/polymère extrême. Au niveau du composite, en raison du rôle sacrificiel du revêtement métallique, également en raison du traitement de surface sans chrome (traitement de conversion) et du primaire, la corrosion sur tranche se trouve considérablement minimisée.

Ce primaire peut être recouvert d'une colle. Cette colle est également appliquée aux rouleaux par enduction, classiquement entre 3 et 20 µm, elle doit impérativement former un film continu en appliquant les conditions de la ligne industrielle (vitesse de la ligne jusqu'à 180 m/min). Cette colle peut être de la famille des époxydes mais aussi de la famille des polyesters. Elle devra également être sélectionnée en raison de sa parfaite compatibilité avec le primaire et le polypropylène mais bien sûr en raison de son absence de retrait durant la cuisson du composite. Grâce à la colle, l'adhésion du film polymérique sur la tôle d'acier est améliorée. On peut choisir comme colle la colle MORAD^{®} de Rohm & Haas ou la colle de référence FL200 ou HL 406 qui sont commercialisées par Kommerling.

Alternativement, on peut également prévoir, en restant dans le cadre de l'invention, de remplacer la colle et/ou le primaire par une couche polymérique adhérente constituée d'une polyoléfine fonctionnalisée de façon à la rendre polaire et donc adhérente entre la tôle et le film polymérique, cette couche assurant l'adhésion du film polymérique sur la tôle. Cette couche adhérente sera soit déposée directement sur le métal, soit coextrudée avec le mélange polymérique selon l'invention. Mais cette couche polymérique devra elle aussi supporter le passage en cataphorèse ainsi que les autres exigences requises dans le domaine automobile. On choisira de préférence un polypropylène greffé anhydride maléique à cet effet.

Le film polymérique est fabriqué de préférence selon un procédé classique d'extrusion. Le polymère, les antioxydants et les charges sont introduits sous forme de granules dans le fourreau cylindrique thermorégulé à l'intérieur duquel tourne une vis sans fin qui malaxe les granules et les transporte vers une filière pour obtenir un mélange homogène en voie fondue. Puis la filière confère à la masse plastique la forme d'un film d'épaisseur d'environ 300 micromètres qui est appliqué sur la tôle éventuellement revêtue du primaire, et le cas échéant de la colle ou de la couche adhérente de polypropylène greffé.

On obtient alors la pièce composite qui, pour des applications automobiles, sera ensuite mise en forme par exemple par emboutissage et soumise à la mise en peinture (phosphatation, cataphorèse, dépôt et cuisson de toutes les couches de peinture). La pièce peut également être découpée, percée et assemblée par vissage, ou soudage avec d'autres thermoplastiques par ultrasons. Le film polymère sera homogène, avec un aspect parfait afin de n'apporter aucune marque lors de la mise en forme du composite. On notera en particulier que la pièce composite selon l'invention a l'avantage d'être formée d'un film polymérique thermoplastique compatible avec le procédé de surmoulage consistant à mouler de la matière plastique sur ou autour d'une pièce.

On peut également prévoir que la face polymérique de la pièce composite soit compatible avec les adhésifs et les mastics du secteur automobile. Pour la réalisation de certaines pièces automobiles, telles que, par exemple, des bas de porte, il est en effet important que collent sur la face polymérique les adhésifs structuraux ou semi-structuraux, les mastics d'étanchéité ou encore les mastics de calage qui sont de nature chimique variée, telle que époxy, polyuréthane et caoutchouc.

La matrice de polypropylène utilisée dans le cadre de l'invention est d'une nature chimique ne permettant pas l'adhérence des adhésifs et mastics. Afin de pallier cet inconvénient, on peut soit fonctionnaliser la matrice soit déposer sur le film polymérique une couche adhésive compatible d'une part avec le polypropylène et d'autre part avec les adhésifs et mastics du secteur automobile.

De préférence on aura recours à une couche adhésive comprenant une polyoléfine fonctionnalisée au moyen de fonctions polaires, telles que acrylates et anhydride maléique. Cette couche adhésive sera soit déposée directement sur le film polymérique par exemple par colamination ou par enduction, soit coextrudée avec le mélange polymérique selon l'invention. Elle aura de préférence une épaisseur comprise entre 30 et 100µm. De préférence on aura recours à une couche de polypropylène greffé anhydride maléique tel que le Priex®25050 commercialisé par la société Addcomp.

Enfin, on notera un avantage remarquable de la pièce composite de l'invention qui réside dans le fait que l'adhérence entre le métal et le polymère est tellement bonne que ainsi ce composite peut-être recyclable ; il supporte ainsi un broyage et un déchiquetage.

Afin d'illustrer l'invention, des essais ont été réalisés et vont être décrits à titre d'exemples non limitatifs.

### Essais

Le module d'Young et l'allongement à rupture sont mesurés selon la norme ASTM D368 avec des éprouvettes de type M-II formées du film polymérique seul, pour une vitesse d'essai de 50 mm/min et à 23°C. Le module d'Young E doit être supérieur à 1000 MPa et l'allongement à la rupture supérieur à celui de l'acier utilisé.

L'adhérence du film polymérique sur la tôle d'acier est évaluée au moyen d'un test de pelage normalisé (ISO11339). A partir d'éprouvettes de 200 mm x 25 mm, on introduit, d'une part, l'extrémité du film polymérique dans un mors d'une machine de traction et, d'autre part, l'extrémité du métal dans le second mors. La force nécessaire au pelage du film pour une vitesse de déplacement des mors de 100 mm/min est indicative de l'adhérence du film. L'adhérence du film est jugé suffisante quand la force de pelage dépasse 2 daN/cm. Ce test est effectué d'une part sur des éprouvettes vieillies à température ambiante et d'autre part sur des éprouvettes ayant subi une étape de cataphorèse, à savoir un maintien à 175°C pendant 30 min.

Le retrait du film polymérique lors de l'étape de cataphorèse est évalué en soumettant un godet, obtenu par emboutissage d'une pièce composite, à une température de 210°C pendant 45 min. Un disque de 150mm de diamètre est découpé dans une pièce composite puis embouti à l'aide d'un poinçon à 25 mm/min de façon à atteindre la profondeur de 50 mm. Après passage à 210°C pendant 45 min, le retrait éventuel du film est mesuré manuellement au niveau de la collerette du godet. Le retrait du film polymérique doit être inférieur à 2 mm en tout point de la collerette.

La tenue en température du film polymérique est évaluée par un test de fluage en exposant une pièce composite verticalement à une température de 210°C pendant 30 min. La tenue en température du film est satisfaisante s'il y a absence de fluage.

La tenue à froid du film polymérique est évaluée en soumettant une pièce composite maintenue à -40°C au choc d'une bille d'acier de 25mm de diamètre et 66,8g lâchée de 1 m. Au niveau du point d'impact, on mesure manuellement le diamètre de la zone de rupture du film polymérique. Ce test est effectué sur des éprouvettes ayant subi une étape de cataphorèse, à savoir un maintien à 175°C pendant 30 min. La rupture du film doit être limitée à une zone très réduite, typiquement 1-2mm de diamètre.

Lors des essais d'extrusion du mélange polymérique, on veille également à ce que l'extrusion se fasse sans dépôt filière, c'est-à-dire sans formation d'agglomérats sur les lèvres de l'extrudeuse. Les mélanges entrainant des dépôts filière sont écartés en raison de l'inhomogénéité du film polymérique formé.

Lors des essais de colamination du film polymérique, on veille également à ce que le film puisse être colaminé à des vitesses supérieures à 50 m/min afin que la fabrication de la pièce composite soit compatible avec les lignes de galvanisation et de laquage.

La compatibilité de la face polymérique de la pièce composite avec les adhésifs et les mastics du secteur automobile est évaluée au moyen d'un test de traction sur une éprouvette formée d'une languette de la pièce composite selon l'invention et d'une languette de métal nu, les deux languettes étant collées sur une partie de leur surface au moyen d'adhésifs et de mastic représentatifs de ceux utilisés dans le secteur automobile. Les adhésifs retenus pour la réalisation de l'essai sont les références BM1496V® (adhésif structural à base d'époxy commercialisé par Dow), RB10BV® (adhésif semi-structural à base de caoutchouc commercialisé par Revocoat) et Terostat1159® (mastic de calage commercialisé par Henkel). La contrainte maximale obtenue lors de l'essai de traction est comparée à une référence constituée de 2 languettes en métal nu. Le résultat ne doit pas s'écarter de plus de 30% de la référence.

### Exemples

Le tableau 1 résume les caractéristiques de quelques pièces composites formées et les propriétés obtenues. PP1 et PP2 sont deux polypropylènes isotactiques se différenciant par leur taux de gel. Ils sont vendus par Total Petrochemicals respectivement sous les références PPC3650 et PPC3666 et incorporent déjà l'EPR.

Il est constaté que seules les pièces composites selon l'invention présentent les caractéristiques techniques souhaitées. En effet :
- En l'absence de charges de renforcement (essais n°5 et 6), le film polymérique présente un module d'Young à 20°C insuffisant et peut présenter un retrait important au test de retrait sur godet,
- En présence de forts taux de charges (essais n°7 et 8), on observe notamment du dépôt filière et une mauvaise résistance au choc à-40°C.
- Si le pourcentage du premier oxydant est inférieur à 0,2% (essai n°9), le film polymérique flue au test de fluage.

Le tableau 2 résume les résultats de compatibilisation avec les adhésifs et les mastics du secteur automobile obtenus avec une couche adhésive coextrudée avec le mélange polymérique selon l'invention.

**Tableau 1 (* = pièce composite selon l'invention ; NE = non évalué)**

| Essai n° | 1* | 2* | 3* | 4* | 5 | 6 | 7 | 8 | 9 |
|---|---|---|---|---|---|---|---|---|---|
| Nature de la matrice | PP1 | PP1 | PP2 | PP1 | PP1 | PP2 | PP1 | PP1 | PP1 |
| Nature de l'élastomère | EPR | EPR | EPR | EPR | EPR | EPR | EPR | EPR | EPR |
| % élastomère dans la matrice PP | 14% | 14% | 16% | 17% | 17% | 16% | 13% | 13% | 14% |
| Nature des charges | µtalc | µtalc | µtalc | µtalc | NON | NON | CaCO3 | CaCO3 | µtalc |
| % de charges | 7% | 8% | 7% | 7% | 0% | 0% | 23% | 34% | 7% |
| 1er oxydant | Ethanox® | Ethanox® | Ethanox® | Ethanox® | Ethanox® | Ethanox® | Ethanox® | Ethanox® | Ethanox® |
| % 1er antioxydant | 0,2% | 0,2% | 0,2% | 0,2% | 0,2% | 0,2% | 0,2% | 0,2% | 0,1% |
| 2ème antioxydant | Ethaphos® | Ethaphos® | Ethaphos® | Ethaphos® | Ethaphos® | Ethaphos® | Ethaphos® | Ethaphos® | Ethaphos® |
| % 2eme antioxydant | 0,1% | 0,1% | 0,1% | 0,1% | 0,1% | 0,1% | 0,1% | 0,1% | 0,1% |
| Vitesse de colamination | 110m/min | 130m/min | NE | NE | NE | NE | 130m/min | NE | 130m/min |
| Dépôt filière | NON | NON | NON | NON | NON | NON | OUI | NE | NON |
| Epaisseur de film (µm) | 300 | 300 | 300 | 300 | 300 | 300 | 300 | 300 | 300 |
| Largeur de film (mm) | 1400 | 1300 | 300 | 300 | 300 | 300 | NE | NE | 1300 |
| Force de pelage (DaN/cm) | 5,24 | 2,2 | 5,23 | 3,61 | 5,54 | 5,03 | NE | NE | NE |
| Force de pelage après cataphorèse (DaN/cm) | NE | NE | 3,81 | 3,74 | 3,81 | 4,29 | NE | NE | NE |
| E (Mpa) Sens Long / Sens travers | 1200 | 2313 | 1200 | 1198 | 820 | 960 | NE | NE | NE |
| | 1300 | 2417 | 1400 | 1000 | 830 | 870 | NE | NE | NE |
| Allongement (%) Sens Long / Sens travers | 1100 | 1276 | 840 | 795 | 950 | 1000 | NE | NE | NE |
| | 900 | 1237 | 880 | 540 | 1100 | 1000 | NE | NE | NE |
| Retrait sur godet (mm) | 0 | 1 | 0 | 0 | 0 | 9 | NE | NE | NE |
| Fluage | NON | NON | NON | NON | NON | NON | NE | NE | OUI |
| Tenue choc à -40°C (mm) | 1,1 | NE | 1 | 1,1 | 0 | 0 | NE | 9 | NE |

**Tableau 2 (* = pièce composite selon l'invention ; NE = non évalué)**

| Essai n° | | 1 | 2* |
|---|---|---|---|
| Nature de la couche adhérente | | Référence | Priex® 25050 |
| Contrainte maximale (Mpa) avec les adhésifs et mastics suivants | BM1496V® | 21,5 | 17,5 |
| | RB10BV® | 11,7 | 14,2 |
| | Terostat 1159® | 0,5 | 0,5 |

## Revendications

1. Pièce composite comprenant au moins une tôle d'acier revêtue d'au moins un film polymérique préalablement formé par extrusion d'un mélange polymérique comportant au moins les éléments suivants :
- un polymère formé d'une dispersion de nodules d'élastomère dans une matrice polypropylène, la proportion d'élastomère dans la matrice étant inférieure à 20% en poids de l'ensemble formé par la matrice et l'élastomère,
- un premier antioxydant de la famille des antioxydants phénoliques pour une teneur en poids supérieure ou égale à 0,2%,
- un deuxième antioxydant de la famillé des antioxydants décomposeurs d'hydropéroxydes pour une teneur en poids supérieure ou égale à 0,1%,
- des charges de renforcement pour une teneur en poids inférieure à 10%.

2. Pièce composite selon la revendication 1, **caractérisée en ce que** la proportion d'élastomère dans la matrice est comprise entre 8 et 20% en poids de l'ensemble formé par la matrice et l'élastomère.

3. Pièce composite selon l'une quelconque des revendications précédentes, **caractérisée en ce que** le premier antioxydant est présent dans le mélange polymérique à hauteur de 0,2% et que le deuxième antioxydant est présent dans le mélange polymérique à hauteur de 0,1%.

4. Pièce composite selon l'une quelconque des revendications précédentes, **caractérisée en ce que** les charges sont du microtalc.

5. Pièce composite selon l'une quelconque des revendications précédentes, **caractérisée en ce qu'**elle comporte en outre une couche polymérique de polyoléfine fonctionnalisée en sous-face du film polymérique.

6. Pièce composite selon l'une quelconque des revendications précédentes, **caractérisée en ce que** le film polymérique est recouvert d'une couche polymérique de polyoléfine fonctionnalisée.

7. Pièce composite selon l'une quelconque des revendications précédentes, **caractérisée en ce qu'**elle comporte en outre, entre la tôle d'acier et le film polymérique, un primaire appliqué sur la tôle d'acier et/ou une colle appliquée sur le primaire.

8. Procédé de fabrication d'une pièce composite selon l'une quelconque des revendications 1 à 7, **caractérisé en ce qu'**il comprend au moins une étape d'extrusion du mélange polymérique sous la forme d'un film et une étape de colamination du film polymérique obtenu sur la tôle d'acier, éventuellement recouverte d'un primaire et d'une colle.

9. Procédé de fabrication selon la revendication 8 d'une pièce selon la revendication 5 ou 6 **caractérisé en ce que** le mélange polymérique est co-extrudé avec la couche polymérique de polyoléfine fonctionnalisée.

10. Utilisation de la pièce composite selon l'une quelconque des revendications 1 à 7 dans le domaine de l'automobile.

11. Utilisation selon la revendication 10, **caractérisée en ce que** la dite pièce composite est mise en forme par emboutissage, estampage, hydroformage ou profilage.

12. Utilisation selon l'une quelconque des revendications 10 ou 11 pour la fabrication de pièces par surmoulage.

## Patentansprüche

1. Verbundteil, aufweisend mindestens ein Stahlblech, das mit mindestens einem Polymerfilm beschichtet ist, der zuvor durch Extrusion eines Polymergemischs ausgebildet wurde, aufweisend mindestens die folgenden Bestandteile:
- ein Polymer, das aus einer Dispersion von Elastomerknötchen in einer Polypropylenmatrix gebildet wird, wobei das Elastomerverhältnis in der Matrix kleiner als 20 Gew.-% der durch die Matrix und das Elastomer gebildeten Gesamtheit beträgt,
- ein erstes Antioxidans aus der Familie der phenolischen Antioxidantien mit einem Gewichtsgehalt von größer oder gleich 0,2%,
- ein zweites Antioxidans aus der Familie der Wasserstoffperoxid-abbauenden Antioxidantien mit einem Gewichtsgehalt von größer oder gleich 0,1%,
- verstärkende Füllstoffe mit einem Gewichtsgehalt von kleiner als 10%.

2. Verbundteil gemäß Anspruch 1, **dadurch gekennzeichnet, dass** das Elastomerverhältnis in der Matrix zwischen 8 Gew.-% und 20 Gew.-% der durch die Matrix und das Elastomer gebildeten Gesamtheit beträgt.

3. Verbundteil gemäß irgendeinem der vorhergehenden Ansprüche, **dadurch gekennzeichnet, dass** das erste Antioxidans in dem Polymergemisch in einer Höhe von 0,2% vorliegt und das zweite Antioxidans in dem Polymergemisch in einer Höhe von 0,1% vorliegt.

4. Verbundteil gemäß irgendeinem der vorhergehenden Ansprüche, **dadurch gekennzeichnet, dass** die Füllstoffe Mikrotalkum sind.

5. Verbundteil gemäß irgendeinem der vorhergehenden Ansprüche, **dadurch gekennzeichnet, dass** es ferner eine Polymerschicht aus funktionalisiertem Polyolefin an der Unterseite des Polymerfilms aufweist.

6. Verbundteil gemäß irgendeinem der vorhergehenden Ansprüche, **dadurch gekennzeichnet, dass** der Polymerfilm mit einer Polymerschicht aus funktionalisiertem Polyolefin bedeckt ist.

7. Verbundteil gemäß irgendeinem der vorhergehenden Ansprüche, **dadurch gekennzeichnet, dass** es ferner zwischen dem Stahlblech und dem Polymerfilm einen auf das Stahlblech aufgebrachten Primer und/oder einen auf den Primer aufgebrachten Klebstoff aufweist.

8. Verfahren zum Herstellen eines Verbundteils gemäß irgendeinem der Ansprüche 1 bis 7, **dadurch gekennzeichnet, dass** es aufweist: mindestens einen Schritt des Extrudierens des Polymergemischs in Form eines Films und einen Schritt des Co-Laminierens des erhaltenen Polymerfilms auf dem Stahlblech, das gegebenenfalls mit einem Primer und einem Klebstoff bedeckt wird.

9. Verfahren zum Herstellen gemäß Anspruch 8 eines Teils gemäß Anspruch 5 oder 6, **dadurch gekennzeichnet, dass** das Polymergemisch mit der Polymerschicht aus funktionalisiertem Polyolefin co-extrudiert wird.

10. Verwendung des Verbundteils gemäß irgendeinem der Ansprüche 1 bis 7 im Kraftfahrzeugbereich.

11. Verwendung gemäß Anspruch 10, **dadurch gekennzeichnet, dass** das Verbundteil mittels Tiefziehens, Pressens, Hydroformens oder Profilierens geformt wird.

12. Verwendung gemäß irgendeinem der Ansprüche 10 oder 11 für die Herstellung von Teilen mittels Konfektionierens.

## Claims

1. Composite part comprising at least one steel sheet coated with at least one polymeric film, shaped beforehand by extruding a polymer blend comprising at least the following elements:
- a polymer formed by a dispersion of elastomer nodules in a polypropylene matrix, the proportion of elastomer in the matrix being less than 20% by weight of the total formed by the matrix and elastomer;
- a first antioxidant from the family of phenolic antioxidants with a content by weight greater than or equal to 0.2%;
- a second antioxidant from the family of hydroperoxide-decomposing antioxidants with a content by weight greater than or equal to 0.1%;
- reinforcing fillers with a content by weight of less than 10%.

2. Composite part as claimed in claim 1, **characterised in that** the proportion of elastomer in the matrix is between 8 and 20% by weight of the total formed by the matrix and elastomer.

3. Composite part as claimed in any one of the preceding claims, **characterised in that** the first antioxidant is present in the polymer blend in a quantity of 0.2% and the second antioxidant is present in the polymer blend in a quantity of 0.1%.

4. Composite part as claimed in any one of the preceding claims, **characterised in that** the fillers are microtalc.

5. Composite part as claimed in any one of the preceding claims, **characterised in that** it further comprises a polymeric layer of functionalised polyolefin on the underside of the polymeric film.

6. Composite part as claimed in any one of the preceding claims, **characterised in that** the polymeric film is coated with a polymeric layer of functionalised polyolefin.

7. Composite part as claimed in any one of the preceding claims, **characterised in that** it further comprises, between the steel sheet and polymeric film, a primer applied to the steel sheet and/or an adhesive applied to the primer.

8. Method of producing a composite part as claimed in any one of claims 1 to 7, **characterised in that** it comprises at least one step of extruding the polymer blend in the form of a film and a step of co-laminating the resultant polymeric film on the steel sheet, optionally coated with a primer and an adhesive.

9. Method as claimed in claim 8 for producing a composite part as claimed in claim 5 or 6, **characterised in that** the polymer blend is co-extruded with the polymeric layer of functionalised polyolefin.

10. Use of the composite part as claimed in any one of claims 1 to 7 in the automotive industry.

11. Use as claimed in claim 10, **characterised in that** said composite part is shaped by embossing, stamping, hydroforming or profiling.

12. Use as claimed in any one of claims 10 or 11 for producing parts by over-moulding.
